# EUROPEAN PATENT APPLICATION

(11) **EP 2 629 538 A1**
(43) Date of publication of application: **21.08.2013**
(21) Application number: 12305174.0
(22) Date of filing: 16.02.2012
(51) Int. Cl.: H04N 21/414, H04H 20/62

(54) **A public transport media transmission system for distribution of live and datacasted multimedia content to passengers' terminals in a vehicle**

(71) Applicant: Alcatel Lucent, 75007 Paris (FR)
(72) Inventor: Kelley, Philip, 91620 Nozay (FR)
(74) Representative: Sciaux, Edmond

(57) **Abstract**

The system comprises:
- a reception module (RM) for receiving live and datacasted multimedia content;
- a cache memory (CDB) for storing content received by the reception module (RM),
- a caching management module (CMM) for writing and retrieving, in the cache memory (CDB), content received by the reception module (RM),
- a wireless access point (RLM) for relaying content to passengers' terminals in the vehicle;
- a streaming module (STM) for streaming content that has been retrieved in the cache memory (CDB), and supplying streamed content to the wireless access point (RLM).
The caching management module (CMM) comprises:
- means for writing, in the cache memory (CDB), datacasted content that has been received by the reception module (RM),
- means for receiving a content request originating from a passenger's terminal,
- and means for retrieving datacasted multimedia content in the cache memory (CDB) and supplying it to the streaming module (SM), as a function of a content request originating from a passenger's terminal.

## Description

### BACKGROUND OF THE INVENTION

### Field of the invention

The present invention generally relates to a public transport media transmission system for distribution of live and datacasted multimedia content in a vehicle. More peculiarly, it relates to media transmission on board trains, subways, trams, buses through on-board wireless access points.

### Description of the prior art

Terrestrial and satellite digital video broadcastings have been designed for the distribution of live and on-demand multimedia content, but a direct transmission to the end user receiver (Smart phones, tablets, laptop computers, etc) does not provide a satisfactory quality if this receiver is moving and is inside a closed vehicle.

The document US 2008/0240061 describes a communication system for an aircraft carrying passengers having personal electronic devices (Smart phones, tablets, laptop computers, etc) adapted for wireless data communications outside the aircraft. This known system comprises:
- a ground-based communication network,
- a WiFi access point in the aircraft for providing data communications with the personal electronic devices of the passengers inside the aircraft,
- an air-to-ground transceiver in the aircraft cooperating with the WiFi access point for bi-directional data communications with the ground-based communications network,
- and a data memory cache in the aircraft, this memory cooperating with the WiFi access point, for storing common web pages accessible by the personal electronic devices, during flight of the aircraft.

Another aspect of this air to ground communication network is to provide video on demand on the aircraft. The video streams may be terrestrial based, or relayed via a satellite. In particular the forward link providing the video is not the same as the return to make the request. The return link is a low data rate link and may be provided by the aircraft passenger's personal electronic devices, relayed over the air to a ground interface. The forward link is a high data rate link received by a terrestrial or satellite based receiver on the aircraft. The video stream is then routed through the aircraft in flight entertainment system to the passenger or to the passenger's personal electronic devices, via WiFi access points.

However this known system is very expensive because it establishes bi-directional dedicated point-to-point links for satisfying the demands of each of the users' terminals; these links add up to very high over the air data throughputs, i. e. costly equipment.

Another known solution is direct ground to in-vehicule distribution of live and on-demand multimedia content through a third generation (3G) wireless network. This solution implies an adapted 3G infrastructure, adapted to the specific constraints of trains, subways, trams, or buses constraints. In the case of subways, such 3G infrastructure requires very specific underground deployments not yet available in most major cities. When deployed, it hardly provides sufficient data throughput for busy hour traffic in subway cars.

A direct ground to in-vehicule four generation (4G) link with evolved Multimedia Broadcast Multicast Control (eMBMS) might be a potential solution, but it is unclear if and when eMBMS will be commonly available in smartphones and tablets, whereas these devices have already 3G and WiFi transmission capability.

A direct ground to in-vehicule WiFi link would require roaming extensions to the standard WiFi versions currently implemented in terminals, which are unlikely to be made available by terminal manufacturers.

Thus, there is a need to provide a more efficient technical solution for distribution of multimedia content transmission on board trains, subways, trams, buses.

This can be solved by the system according to the invention.

### SUMMARY OF THE INVENTION

The object of the invention is a public transport media transmission system for distribution of live and datacasted multimedia content to passengers' terminals in a vehicle, comprising:
- a reception module for receiving live and datacasted multimedia content;
- a cache memory for storing content received by the reception module (RM),
- a caching management module for writing and retrieving, in the cache memory, content received by the reception module,
- and a wireless access point for relaying content to passengers' terminals in the vehicle;
   **characterized in that** it further comprises a streaming module for streaming content that has been retrieved in the cache memory, and supplying streamed content to the wireless access point,
   and in that the caching management module comprises:
- means for writing, in the cache memory, datacasted content that has been received by the reception module,
- means for receiving a content request originating from a passenger's terminal,
- and means for retrieving datacasted multimedia content in the cache memory and supplying it to the streaming module, as a function of a content request originating from a passenger's terminal.

Datacasting (data broadcasting) is the broadcasting of data supplemental to live programs sent by digital television stations. This data -- video, audio, graphics and text -- can be embedded into the broadcast signal to be downloaded, stored and viewed later. An electronic program guide is usually included.

In addition to immediately relaying live radio or TV channels to passengers' terminals, the communication system stores some popular datacasted content in a cache memory. This cached content is regularly refreshed through a digital video broadcast link, and is ready for streaming towards passengers' terminals, if and when passengers' terminals request some of this stored content.

This solution mitigates the throughput limitations incurred when performing ground to vehicle transmission, by transmitting and regularly refreshing a same popular content package only once from the ground to the vehicle. On board the vehicle, this content is stored once in the cache memory, and then it is offered to many users, instead of establishing a dedicated bi-directional point-to-point link for each of the users' terminals and sending a request for multimedia content to a ground network.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 represents a subway train comprising one embodiment of the system according to the invention, in each carriage.
- Figure 2 represents one embodiment of the system according to the invention.

### DETAILED DESCRIPTION OF THE PREFERRED EMBODIMENTS

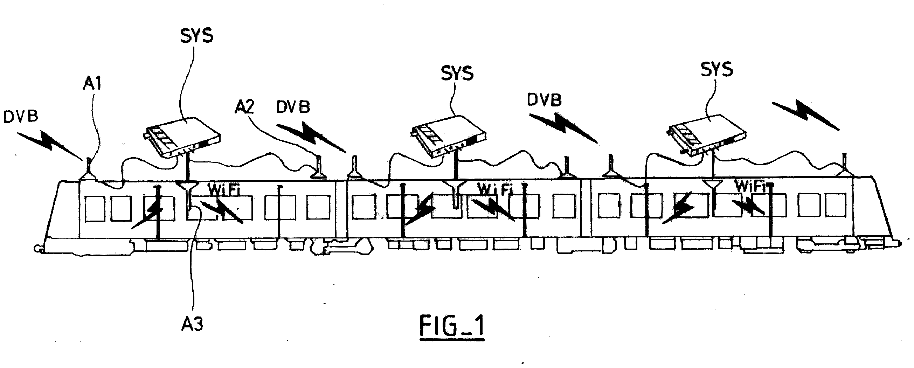

The subway train represented on Figure 1 comprises three cars. Each car comprises one communication unit SYS that is an embodiment of the system according to the invention. This communication unit SYS is connected to outside aerials A1 and A2, and an inside aerial A3 in the middle of the car. In this example, the outside aerials A1 and A2 are adapted for receiving classical digital video broadcast (DVB) and datacasting; and the inside aerial A3 is adapted for WiFi communication. The inside aerial A3 relays DVB radio or video content to personal electronic devices of passengers (Smart phones, tablets, laptop computers, etc).

In other embodiments, WiF'i access points can be replaced by 3G or 4G femto base stations, or other widely used radio links.

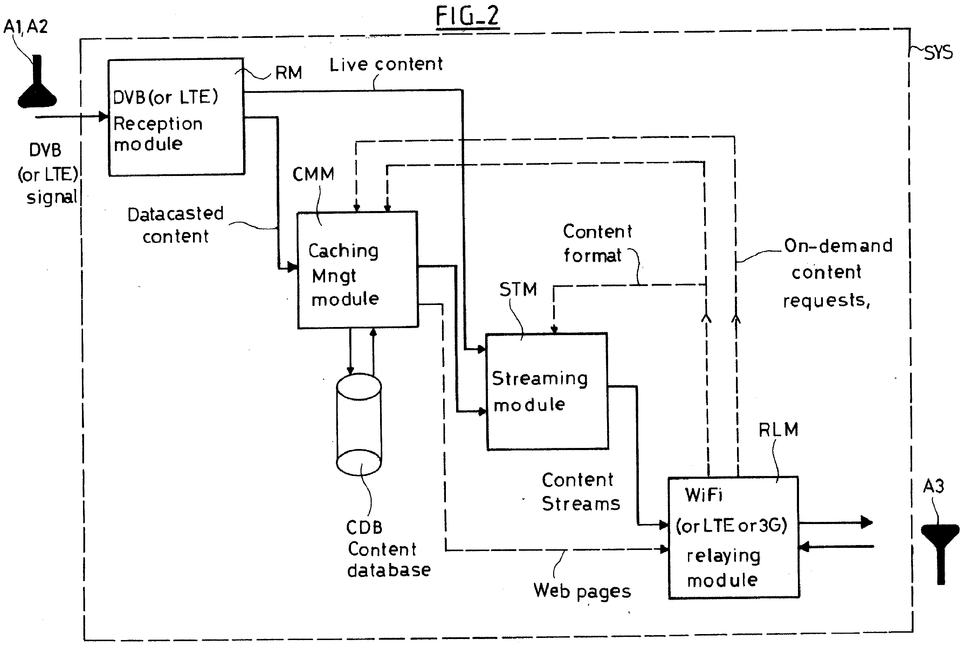

Figure 2 schematically represents one embodiment SYS of the system according to the invention. This embodiment comprises:
- A DVB reception module RM, coupled to the outside aerials A1, A2. It has an out put for live content and an output for datacasted content.
- A cache memory constituted by a content data base CDB.
- A caching management module CMM having:
   - an output-input coupled to the content database CDB, for writing and retrieving content in this cache memory,
   - and a first input coupled to the output of the reception module RM supplying datacasted content;
- A streaming module STM having:
   - a first input coupled to the output of the reception module RM supplying live content,
   - a second input coupled to an output of the caching management module CMM supplying datacasted content that has been retrieved in the content data base CDB,
   - and an output supplying streamed datacasted content;
- A WiFi relaying module RLM having:
   - an input-output coupled to the inside aerial A3,
   - an input coupled to the output of the streaming module STM supplying streamed datacasted content,
   - an input coupled to a second output of the caching management module STM supplying web pages for Hypertext Transfer Protocol (HTTP) dialog with passengers' terminals,
   - an output coupled to a second input of the caching management module CMM and to a third input of the streaming module for supplying them with a content format command resulting from a content request originating from a passenger's terminal;
   - an output coupled to a third input of the caching management module CMM for supplying it with an on-demand content request originating from a passenger's terminal;

The reception module RM re-transmits live DVB content directly through WiFi relaying module RLM inside the car, without noticeable delay. It carries live TV or radio. The link between the ground and the vehicle is unidirectional, so the passengers cannot send request to the DVB network.

According to the invention, the receiving module RM also receives datacasted additional multimedia content. This additional content is not directly retransmitted through WiFi relaying module RLM inside the car. It is retransmitted on demand, i. e. as a function of requests originating from passengers' terminals.

The caching management module CMM comprises:
- software means for writing and retrieving, in the cache memory CDB, datacasted content received by the reception module (RM),
- a web server for Hypertext Transfer Protocol (HTTP) dialog with passengers' terminals, for receiving the on-demand content requests originating from passengers' terminals,
- software means for retrieving stored datacasted contend, in the cache memory CDB, according to the content request of a passenger,
- and software means for supplying it to the streaming module STM, in a content format according to the content request of a passenger,

The content format is a function of the streaming technology requested by the passenger's terminal: typically Apple's HTTP Live Streaming (HLS), Microsoft's Smooth Streaming, Adobe's HTTP-based Dynamic Streaming (HDS), or MPEG-DASH (Moving Picture Experts Group- Dynamic Adaptive Streaming over HTTP).

When a passenger requests a datacasted content that is already stored, the stored content is read out of the content data base CDB, then is put into the format requested by a passenger's terminal, by the streaming module STM, and then is streamed to the passenger's terminal by the WiFi relaying module RM.

The datacasted additional multimedia content is constituted of popular clips (catch-up TV, a selection of audios and videos, movie trailers). It is stored in the cache memory CDB, along with advertisement. The additional multimedia contend is retransmitted through WiFi relaying module RLM inside the car, if and when some passenger's terminal sends a request to the system SYS. This service to passengers' terminals is intended to be free-on-air, and the business model is sustained by the revenue from inserting advertisement in the form of screens, banners, pop-ups, teaser texts, etc.

The caching management module CMM further comprises:
- A client for the protocol called File Delivery over Unidirectional Transport (FLUTE) which is a protocol for the unidirectional delivery of files over the Internet, which is particularly suited to multicast networks. This FLUTE client receives data carousels broadcasted over the DVB network according to the FLUTE protocol. This includes program guides, catalogs of non-linear content as well as non-linear content itself.
- Possibly a client performing a similar function if eMBMS (or other broadcasting technique) is used to broadcast data over a LTE (or other) network, instead of DVB.
- Possibly an audience metering function which collects and delivers statistics on non-linear content usage.

Unlicensed (WiFi) as well as licensed (3G or 4G) spectrum may be used for transmission between the relaying module RLM and the terminals. So the proposed system massively addresses already available and popular terminals that are present in public transports at busy hour, since no modification is needed in the existing terminals of the passengers. Furthermore, there is no need for passengers to engage into podcast preparation and care, and so there is no issue with content owners regarding storage of content in users' terminals.

In other embodiments, the reception module RM may be adapted for receiving live or on-demand multimedia content broadcasted by:
- An Advanced Television System Committee (ATSC) network.
- An Integrated Services Digital Broadcasting (ISDB) network.
- A China Mobile Multimedia Broadcasting (CMMB) network.
- A Digital Terrestrial Multimedia Broadcast (DTMB) network.
- A Terrestrial Digital Multimedia Broadcasting (T-DMB) network.
- A long term evolution (LTE) technology.

The relaying module may be adapted to 3G or LTE technology instead of WiFi.

Although primarily intended for public transports (in particular subways and trains), the solution is also applicable to taxis and private cars.

## Claims

1. A public transport media transmission system (SYS) for distribution of live and datacasted multimedia content to passengers' terminals in a vehicle, comprising:
- a reception module (RM) for receiving live and datacasted multimedia content;
- a cache memory (CDB) for storing content received by the reception module (RM),
- a caching management module (CMM) for writing and retrieving, in the cache memory (CDB), content received by the reception module (RM),
- and a wireless access point (RLM) for relaying content to passengers' terminals in the vehicle;
**characterized in that** it further comprises a streaming module (STM) for streaming content that has been retrieved in the cache memory (CDB), and supplying streamed content to the wireless access point (RLM),
and **in that** the caching management module (CMM) comprises:
- means for writing, in the cache memory (CDB), datacasted content that has been received by the reception module (RM),
- means for receiving a content request originating from a passenger's terminal,
- and means for retrieving datacasted multimedia content in the cache memory (CDB) and supplying it to the streaming module (SM), as a function of a content request originating from a passenger's terminal.

2. A system according to claim 1, **characterized in that** said reception module (RM) is adapted for receiving live or on-demand multimedia content broadcasted by a Digital Video Broadcasting (DVB) network.

3. A system according to claim 1, **characterized in that** said reception module (RM) is adapted for receiving live or on-demand multimedia content broadcasted by an Advanced Television System Committee (ATSC) network.

4. A system according to claim 1, **characterized in that** said reception module (RM) is adapted for receiving live or on-demand multimedia content broadcasted by an Integrated Services Digital Broadcasting (ISDB) network.

5. A system according to claim 1, **characterized in that** said reception module (RM) is adapted for receiving live or on-demand multimedia content broadcasted by a China Mobile Multimedia Broadcasting(CMMB) network.

6. A system according to claim 1, **characterized in that** said reception module (RM) is adapted for receiving live or on-demand multimedia content broadcasted by a Digital Terrestrial Multimedia Broadcast (DTMB) network.

7. A system according to claim 1, **characterized in that** said reception module (RM) is adapted for receiving live or on-demand multimedia content broadcasted by a Terrestrial Digital Multimedia Broadcasting (T-DMB) network.

8. A system according to claim 1, **characterized in that** said reception module (RM) is adapted for receiving live or on-demand multimedia content broadcasted by a long term evolution network.

9. A system according to claim 1, **characterized in that** said wireless access point (RLM) is a WiFi access point.

10. A system according to claim 1, **characterized in that** said wireless access point (RLM) is a 3G base station.

11. A system according to claim 1, **characterized in that** said wireless access point (RLM) is a long term evolution base station.

## Amended claims

### Amended claims in accordance with Rule 137(2) EPC.

**1.** A public transport media transmission system (SYS) for distribution of live and datacasted multimedia content to passengers' terminals in a vehicle, comprising:
- a reception module (RM) for receiving live and datacasted multimedia content;
- a cache memory (CDB) for storing content received by the reception module (RM),
- a caching management module (CMM) for writing and retrieving, in the cache memory (CDB), content received by the reception module (RM),
- a wireless access point (RLM) for relaying content to passengers' terminals in the vehicle;
- a streaming module (STM) for streaming content that has been retrieved in the cache memory (CDB), and supplying streamed content to the wireless access point (RLM),
**characterized in that** the caching management module (CMM) comprises:
- a web server for Hypertext Transfer protocol for dialog with passengers' terminals, for receiving a content request originating from a passenger's terminal,
- and means for retrieving datacasted multimedia content in the cache memory (CDB) and supplying it to the streaming module (SM), as a function of a content request originating from a passenger's terminal.

**2.** A system according to claim 1, **characterized in that** said reception module (RM) is adapted for receiving live or on-demand multimedia content broadcasted by a Digital Video Broadcasting (DVB) network.

**3.** A system according to claim 1, **characterized in that** said reception module (RM) is adapted for receiving live or on-demand multimedia content broadcasted by an Advanced Television System Committee (ATSC) network.

**4.** A system according to claim 1, **characterized in that** said reception module
